# EUROPÄISCHE PATENTSCHRIFT

(11) **EP 1 113 955 B1**
(45) Veröffentlichungstag und Bekanntmachung des Hinweises auf die Patenterteilung: **02.11.2005**
(21) Anmeldenummer: 00943981.1
(22) Anmeldetag: 04.07.2000
(51) Int. Cl.: B62D 1/19

(54) **LENKSPINDEL**
STEERING SHAFT
ARBRE DE DIRECTION

(30) Priorität: 16.07.1999 DE 19933502
(43) Veröffentlichungstag der Anmeldung: 11.07.2001
(73) Patentinhaber: Bayerische Motoren Werke Aktiengesellschaft, 80809 München (DE); Krupp Presta Aktiengesellschaft, 9492 Eschen (LI)
(72) Erfinder: FAULSTROH, Hans-Joachim, D-86511 Schmiechen (DE); SCHROETER, Frank, D-85368 Moosburg (DE); KLUKOWSKI, Christoph, CH-8880 Walenstadt (CH); MOCK, Elmar, CH-2500 Biel/Bienne (CH); RENKER, Matthias, CH-3652 Hiltertingen (CH); HELL, Matthias, CH-2502 Biel/Bienne (CH)
(74) Vertreter: Schmidt, Günter H. H.
(86) Internationale Anmeldenummer: PCT/EP2000/006222
(87) Internationale Veröffentlichungsnummer: WO 2001/005642

(56) Entgegenhaltungen:
- DE-A- 2 548 020
- US-A- 3 468 181

## Beschreibung

Die Erfindung bezieht sich auf eine Lenkspindel mit einem im Crashfall verformbaren Abschnitt, der durch einen dünnwandigen, mit einem inkompressiblen, fließfähigen Material gefüllten Behälter gebildet wird, und wobei eine Einrichtung zum Öffnen des Behälters im Crashfall vorgesehen ist, und geht aus von der gattungsbildenden US-3,468,181.

Um im Crashfall die Bewegung des Lenkgetriebes zum Fahrer durch die Vorderwagenintrusion vom Verhalten der Lenksäule gegenüber dem Fahrer zu entkoppeln, ist es bekannt, die Lenkspindel mit einem Abschnitt zu versehen, der sich im Crashfall verformt.

Dazu kann ein Teil der Lenkspindel durch ein Wellrohr gebildet sein, die Lenkspindel kann eine vorgebogene Soll-Biegestelle aufweisen oder es kann eine biegsame Welle oder ein Metallschlauch vorgesehen sein. Ferner kann zur Entkopplung der Vorderwagenintrusion vom Lenksäulenverhalten in die Lenkspindel eine Schwinge oder ein Abscherelement mit zur Lenkspindel schräger Scherfläche integriert oder die Lenkspindel teleskopierbar ausgebildet sein.

Während das Wellrohr und die Sollbiegestelle ein hohes Kraftniveau zur Verformung benötigen und bei biegsamen Wellen und Metallschläuchen die Torsionssteifigkeit zu wünschen übrig läßt, besitzt die teleskopierbare Lenkspindel eine optimale Funktion nur bei axialer Krafteinleitung, die bei einem Crash aber unwahrscheinlich ist. Beim Abscherelement ist nachteilig, dass es schon bei einem niedrigen Sicherheitsniveau, beispielsweise bei einer stoßartigen Belastung eines gelenkten Rades, z.B. im Offroad-Betrieb abgeschert werden kann. Der Nachteil der Schwinge besteht vor allem in ihrem großen Bauraum- und Freiraumbedarf.

Zwar ist aus der eingangs genannten US-3,468,181 eine weitere teleskopierbare Lenkspindel bekannt, von welcher ein Abschnitt durch einen quasi flexiblen Behälter gebildet wird, der mit einem fließfähigen Medium befüllt ist.

Jedoch erfolgt bei diesem bekannten Stand der Technik das Öffnen des Behälters allein durch vom Fahrzeug-Fahrer ausgehende Druckeinwirkung, d.h. indem der Fahrer bedingt durch einen Fahrzeug-Crash gegen das Lenkrad geschleudert wird. Dies ist insofern unbefriedigend, als hierbei bereits ernsthafte Verletzungen hervorgerufen werden können, die ja gerade vermieden werden sollen.

Aufgabe der Erfindung ist es daher, eine Lenkspindel mit geringem Bauraum- und Freiraumbedarf und hoher Torsionssteifigkeit bereitzustellen, die mit niedrigem Kraftniveau und unabhängig von der Krafteinleitungsrichtung eine einwandfreie Entkopplung der Vorderwagenintrusion vom Lenksäulenverhalten im Crashfall sicherstellt.
Dies wird erfindungsgemäß mit der im Anspruch 1 gekennzeichneten Lenkspindel erreicht. In den Unteransprüchen sind vorteilhafte Ausgestaltungen der erfindungsgemäßen Lenkspindel angegeben.

Analog dem bekannten Stand der Technik besteht ein axialer Abschnitt der Lenkspindel aus einem dünnwandigen Behälter, der mit einem inkompressiblen, fließfähigen Material gefüllt ist. Der Behälter besteht beispielsweise aus einem Blech oder dgl. verformbaren dünnwandigen Material.

Wie eine geschlossene, mit einer Flüssigkeit gefüllte Büchse weist der Behälter im geschlossenen Zustand damit eine hohe Torsionssteifigkeit zur **Drehmomentübertragung** auf, während er nach dem Öffnen unter Austritt des fließfähigen Materials wie eine geöffnete Büchse leicht tordiert und/oder zusammengedrückt werden kann.

Damit das fließfähige Material im Crashfall aus dem Behälter austreten kann, ist die erfindungsgemäße Lenkspindel mit einer Einrichtung versehen, durch die der Behälter gezielt im Crashfall geöffnet wird.

Diese Einrichtung zum Öffnen des Behälters kann in unterschiedlicher Weise ausgebildet sein. So kann eine elektromagnetische Einrichtung zum Öffnen des Behälters vorgesehen sein, beispielsweise ein Elektromagnetventil oder dgl. Absperrorgan, das im Crashfall über eine Auswerteeinheit von einem Crashsensor betätigt wird. Ferner kann, z.B. eine mechanische Einrichtung zum Öffnen des Behälters vorgesehen sein, beispielsweise eine Spitze, Schneide oder dgl. penetrierendes Element, das an der dem Behälter zugewandten Seite eines mit dem Lenkgetriebe verbundenen Teils angeordnet ist, das gegenüber dem Behälter verschiebbar geführt ist, beispielsweise teleskopisch in einem mit dem Behälter verbundenen Lenkspindelabschnitt. Das penetrierende Element dringt damit in die eine Stirnseite des Behälters ein, wodurch gleich zu Beginn des Crashs die Vorderwagenintrusion von dem Lenksäulenverhalten durch Verformen des Behälters entkoppelt werden kann. Daneben ist es ebenso denkbar, daß die Einrichtung zum Öffnen des Behälters diesen lediglich anreißt oder aufschlitzt, ohne in das Innere des Behälters einzudringen.

Zudem kann eine pyrotechnische Einrichtung zum Öffnen des Behälters vorgesehen sein, die über eine Auswerteeinheit von einem Crashsensor gezündet wird. Durch die Auswerteeinheit kann beispielsweise das Sicherheitsniveau und der Zeitpunkt zur Initiierung der pyrotechnischen Ladung und damit zum Verformen des Behälters vorgegeben werden. Bei einem leichten Crash kann die Lenkfähigkeit damit aufrechterhalten werden.

Die pyrotechnische Einrichtung kann durch eine pyrotechnische Ladung im Innern des Behälters gebildet sein, die nach ihrer Zündung durch Erhöhung des Behälterinnendrucks zum Öffnen des Behälters führt. Auch kann an einer Stirnseite des Behälters eine Druckkammer mit der pyrotechnischen Ladung vorgesehen sein, wobei das fließfähige Material im Behälter beispielsweise auf der gegenüberliegenden Stirnseite des Behälters austritt.

Um das Öffnen des Behälters und damit den Austritt des fließfähigen Materials zu erleichtern, sind die Stirnseiten des Behälters vorzugsweise mit einer Berstfolie oder dgl. Sollbruchstellen versehen.

Die pyrotechnische Einrichtung zum Öffnen des Behälters kann auch durch einen von den Verbrennungsgasen der pyrotechnischen Ladung beaufschlagbaren Kolben in einem Zylinder gebildet sein, wobei der Kolben mit einer Spitze oder dgl. penetrierendem Element zum Öffnen des Behälters versehen ist.

Das inkompressible, fließfähige Material im Behälter kann eine Flüssigkeit sein, z.B. Wasser oder ein Öl, beispielsweise Mineral- oder Silikonöl. Auch kann es sich um feste inkompressible, fließfähige Materialien handeln. Ebenso sind Kombinationen inkompressibler Flüssigkeiten und Festkörpermaterialien denkbar.

Damit es aus der Öffnung im Behälter mit geringem Kraftbedarf und hoher Geschwindigkeit austreten kann, muss das inkompressible, fließfähige Material allerdings einen geringen Scherwiderstand besitzen. Auch werden aus Gewichtsgründen leichte Materialien bevorzugt, beispielsweise Gemische aus Flüssigkeiten und leichten Füllstoffen, insbesondere Mikrohohlkugeln, z.B. aus Glas oder Kunststoff.

Durch den in die erfindungsgemäße Lenkspindel integrierten Behälter wird im Crashfall eine sichere Entkopplung der Vorderwagenintrusion vom Lenksäulenverhalten bei geringem Kraftniveau erreicht.

Durch seine Füllung mit dem inkompressiblen, fließfähigen Material besitzt der Behälter im Fahrbereich eine Steifigkeit, die eine einwandfreie Drehmomentübertragung bei minimaler Torsionselastizität sicherstellt.

Der koaxial zur Lenkspindel angeordnete Behälter kann einen der Lenkspindel entsprechenden Durchmesser besitzen, sodass sich kein zusätzlicher Bauraum- oder Freiraumbedarf ergibt. Auch ist die Funktion der erfindungsgemäßen Lenkspindel von der Krafteinleitungsrichtung unabhängig, da der geöffnete Behälter auch bei Querkräften einwandfrei kollabiert.

Um den Behälter zu schützen und die Folgen einer Fehlauslösung zu minimieren, kann die Lenkspindel im Bereich des Behälters einen Schutzmantel, beispielsweise aus einem Metall- oder Kunststoffgewebe, faserverstärkten Kunststoff oder dgl. aufweisen, welcher den Behälter umschließt und die durch den Behälter getrennten Lenkspindelabschnitte miteinander verbindet. Damit wird die Lenkfähigkeit, wenn auch bei vergrößerter Elastizität, soweit aufrechterhalten, dass das Fahrzeug zumindest bis zum Ausrollen noch weitergelenkt werden kann.

Nachstehend ist eine Ausführungsform der erfindungsgemäßen Lenkspindel anhand der Zeichnung beispielhaft näher erläutert. Darin zeigen:
- Fig. 1: perspektivisch eine Lenkspindel mit teilweise weggenommenem Schutzmantel;
- Fig. 2: schematisch einen Schnitt durch die Lenkspindel nach Fig. 1; und
- Fig. 3 und 4: in vergrößerter Wiedergabe den oberen bzw. unteren Bereich des in die Lenkspindel integrierten mit einem inkompressiblen, fließfähigen Material gefüllten Behälter.

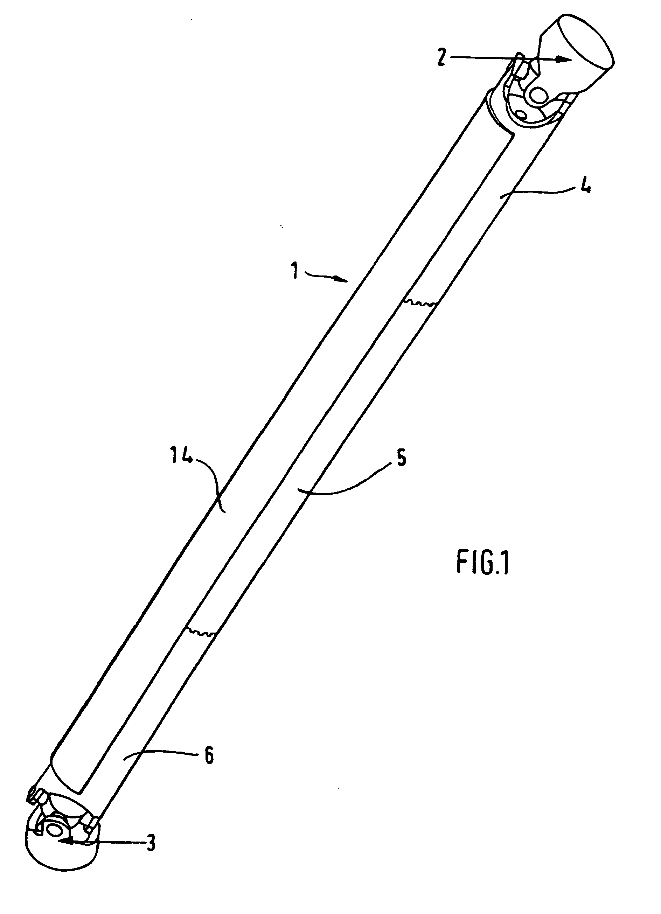

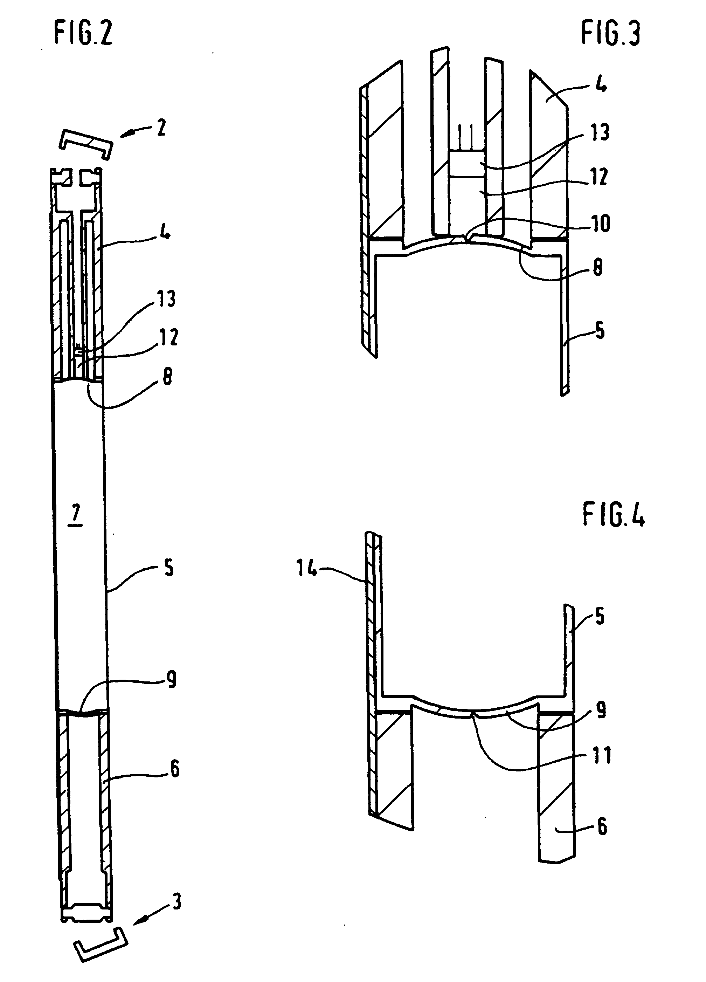

Gemäß Fig. 1 weist eine Lenkspindel 1 ein oberes Kardangelenk 2 auf, an das das nicht dargestellte Lenkrad angeschlossen ist, und ein unteres Kardangelenk 3, an das das nicht dargestellte Lenkgetriebe angeschlossen ist.

Die Lenkspindel 1 besteht aus einem dickwandigen oberen rohrförmigen Abschnitt 4 mit dem oberen Kardangelenk 2 und einem dickwandigen unteren rohrförmigen Abschnitt 6 mit dem Kardangelenk 3. Zwischen dem oberen Abschnitt 4 und dem unteren Abschnitt 6 ist ein zylindrischer Behälter 5 mit einer dünnwandigen Umfangswand beispielsweise aus Blech angeordnet.

Der Behälter 5 ist vollständig mit einem inkompressiblen, fließfähigen Material 7 gefüllt, beispielsweise mit Silikonöl, das zur Gewichtsreduktion einen hohen Anteil an Mikroglashohlkugeln enthalten kann.

Der Behälter 5 kann mit dem oberen und dem unteren Abschnitt 4 bzw. 6 beispielsweise durch Stoffschluss, also z.B. Kleben oder Schweißen oder durch Formschluss, verbunden sein, z.B. durch Ausbildung als Außenmehrkant im oberen bzw. unteren Randbereich und Ausbildung des oberen bzw. unteren rohrförmigen Abschnitts 4 bzw. 6 im Verbindungsbereich als entsprechender Innenmehrkant.

Die obere und untere Stirnwand 8 bzw. 9 des Behälters 5 ist mit einer Sollbruchstelle 10 bzw. 11 versehen. Zugleich wird durch die obere Stirnwand 8 im Bereich der Sollbruchstelle 10 ein Druckraum 12 in dem oberen Lenkspindelabschnitt 4 verschlossen, in dem eine Zündpille oder dgl. pyrotechnische Ladung 13 angeordnet ist, die elektrisch durch eine nicht dargestellte Auswerteeinheit gezündet wird, die von einem nicht dargestellten Crashsensor angesteuert wird.

Beim Zünden der pyrotechnischen Ladung 13 im Crashfall reißen die Sollbruchstellen 10 und 11 in der Stirnwand 8 bzw. 9 durch den Druck im Druckraum 12 auf, wobei das Material 7 im Behälter 5 über die aufgerissene untere Stirnwand 9 in den unteren Abschnitt 6 der Lenkspindel 1 austritt.

Während der mit dem Material 7 gefüllte Behälter 5 der Lenkspindel 1 die für die Drehmomentübertragung erforderliche Steifigkeit bei minimaler Elastizität verleiht, kollabiert der Behälter 5 im Crashfall durch Austritt des Materials 7. Durch die Verformung des Behälters 5 wird bei geringem Kraftniveau die Vorderwagenintrusion von dem Lenksäulenverhalten entkoppelt.

Die Lenkspindel 1 ist mit einem dünnwandigen Schutzmantel 14 umgeben, der den oberen Abschnitt 4 mit dem unteren Abschnitt 6 verbindet.

## Patentansprüche

1. Lenkspindel (1) mit einem sich im Crashfall verformbaren Abschnitt, der durch einen dünnwandigen, mit einem inkompressiblen, fließfähigen Material (7) gefüllten Behälter (5) gebildet wird, und mit einer Einrichtung zum Öffnen des Behälters (5) im Crashfall, **dadurch gekennzeichnet, dass** der Behälter (5) im geschlossenen Zustand eine hohe Torsionssteifigkeit zur Drehmomentübertragung aufweist.

2. Lenkspindel nach Anspruch 1, **dadurch gekennzeichnet, dass** eine pyrotechnische, mechanische und/oder elektromagnetische Einrichtung zum Öffnen des Behälters (5) vorgesehen ist.

3. Lenkspindel nach Anspruch 1 oder 2, **dadurch gekennzeichnet, dass** der Behälter (5) zum Öffnen an wenigstens einer Stirnseite (8, 9) eine Sollbruchstelle (10, 11) aufweist.

4. Lenkspindel nach einem der vorstehenden Ansprüche, **dadurch gekennzeichnet, dass** das inkompressible, fließfähige Material (7) durch ein Gemisch aus einer Flüssigkeit und einem Festkörpermaterial gebildet wird.

5. Lenkspindel nach einem der vorstehenden Ansprüche, **dadurch gekennzeichnet, dass** im Bereich des Behälters (5) ein Schutzmantel (14) vorgesehen ist, der die durch den Behälter (5) getrennten Lenkspindelabschnitte (6, 7) miteinander verbindet.

## Claims

1. A steering spindle (1) comprising a section which is deformable in the event of a crash and formed by a thin-walled container (5) filled with an incompressible, flowable material (7), and comprising a device for opening the container (5) in the event of a crash, **characterised in that** in the closed state, the container (5) has a high torsional rigidity for torque transmission.

2. A steering spindle according to claim 1, **characterised in that** a pyrotechnical, mechanical and/or electromagnetic device is provided for opening the container (5).

3. A steering spindle according to claim 1 or 2, **characterised in that** the container (5) has a predetermined breaking point (10, 11) on at least one end face (8, 9) for opening.

4. A steering spindle according to any one of the preceding claims, **characterised in that** the incompressible, flowable material (7) is formed by a mixture of a liquid and a solid material.

5. A steering spindle according to any one of the preceding claims, **characterised in that** a protective jacket (14) which connects the steering spindle sections (6, 7) separated by the container (5) to one another is provided in the region of the container (5).

## Revendications

1. Arbre de direction (1) comportant un segment déformable en cas de collision, ce segment étant formé par un réservoir (5) à paroi mince, rempli d'une matière (7) incompressible, susceptible de couler, ainsi qu'une installation pour ouvrir le réservoir (5) en cas de collision,
**caractérisé en ce que**
le réservoir (5) présente une rigidité en torsion, élevée, à l'état fermé, pour transmettre un couple.

2. Arbre de direction selon la revendication 1,
**caractérisé par**
une installation pyrotechnique, mécanique et/ou électromagnétique pour ouvrir le réservoir (5).

3. Arbre de direction selon la revendication 1 ou 2,
**caractérisé en ce qu'**
au moins une face frontale (8, 9) du réservoir (5) comporte un point de rupture de consigne (10, 11) pour l'ouverture.

4. Arbre de direction selon l'une des revendications précédentes,
**caractérisé en ce que**
la matière (7), incompressible, susceptible de couler, est formée par un mélange d'un liquide et d'une matière solide.

5. Arbre de direction selon l'une des revendications précédentes,
**caractérisé en ce qu'**
au niveau du réservoir (5) il est prévu une enveloppe de protection (14) reliant les segments d'arbre de direction (6, 7) séparés par le réservoir (5).
